# EUROPEAN PATENT APPLICATION

(11) **EP 1 248 206 A1**
(43) Date of publication of application: **09.10.2002**
(21) Application number: 01108609.7
(22) Date of filing: 05.04.2001
(51) Int. Cl.: G06F 17/30

(54) **Method and apparatus for database table definition**

(71) Applicant: SUN MICROSYSTEMS, INC., Palo Alto, California 94303 (US)
(72) Inventor: Janssen, Ocke, 20255 Hamburg (DE); Schönheit, Frank, 22047 Hamburg (DE)
(74) Representative: Betten & Resch

(57) **Abstract**

A method for defining the properties of columns of database tables, said method comprising receiving a user input for selecting at least one source column of a first database table as a source from which metadata defining the properties of said column is to be copied, receiving a user input to select a target location of a definition table which defines the column properties of a second database table as a target into which said metadata is to be copied, copying said metadata from said source to said target in order to define the properties of at least one column of said second database table such that it corresponds to the definition of the properties of said one or more columns of said first database table selected as a source.

## Description

### FIELD OF THE INVENTION

The present invention relates to the definition of database tables, and in particular it relates to the definition of column data for the columns which form tables of databases.

### BACKGROUND OF THE INVENTION

Databases are widely distributed for organizing, managing and querying data in an ordered form. So-called relational databases are based on table structures in which the data is organized in columns and rows. One row typically is called a data set or a data record, and the columns typically contain different attributes for the individual data sets.

In order to explain some basic principles of databases reference is made to Figure 1 B, where a database table for a film or movie database is exemplarily shown. One row in this table corresponds to an individual movie, and each column corresponds to different attributes for the individual films. The second column indicates the film name, the third column the film length, and the third column a descriptive text for the film. The first column in Fig. 1B contains the so-called "primary key" which is a unique identifier for each of the datasets contained in the table.

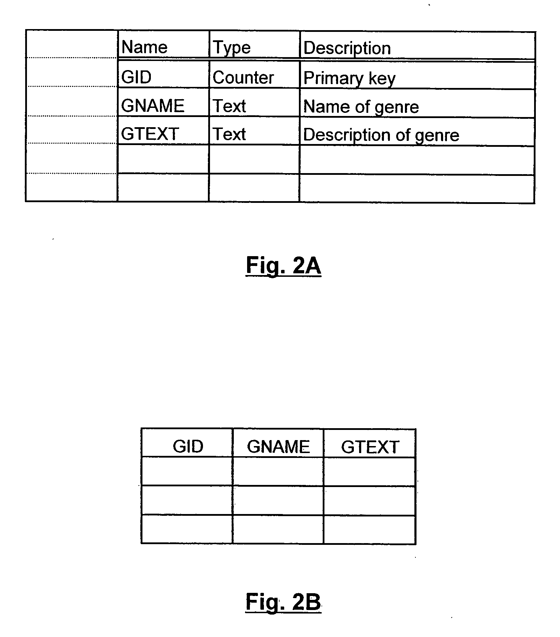

Another basic concept, the so-called "relations" is explained in connection with the fifth column which is the so-called genre identification number, here abbreviated GID. Relational databases typically are organized into a plurality of database tables, and one field of a first database table may refer to a database record of another database table. This is the case for the genre ID as will be explained in connection with Figure 2A.

Figure 2B shows another table, the so-called genre table, in which the genre information is stored. The first column of Figure 2B is the genre ID (the primary key of the table of Fig. 2B), the second column is the genre name (such as action, drama, comedy, etc.), and the third column is some explanatory text here named GTEXT.

Each of the tables shown in Figures 1B and 2B in its first column has a so-called primary key which is a unique identification for identifying the individual data sets (the rows) of each table. As can be seen in Figure 1B, the last column GID has the same name as the first column of Figure 2B which is the primary key of the genre table.

By such a configuration the last column of the film table of Figure 1B may "reference" the genre table by referring for each field in the last column of the Figure 1 B to a corresponding data set (a row) of the table of Figure 2B.

With such kind of references "relations" between different tables can be generated, and it thereby becomes possible, for example, to insert the genre information contained in the table of Figure 2B only once, and this genre information can then be referred to by any other tables without the need for further inputting it.

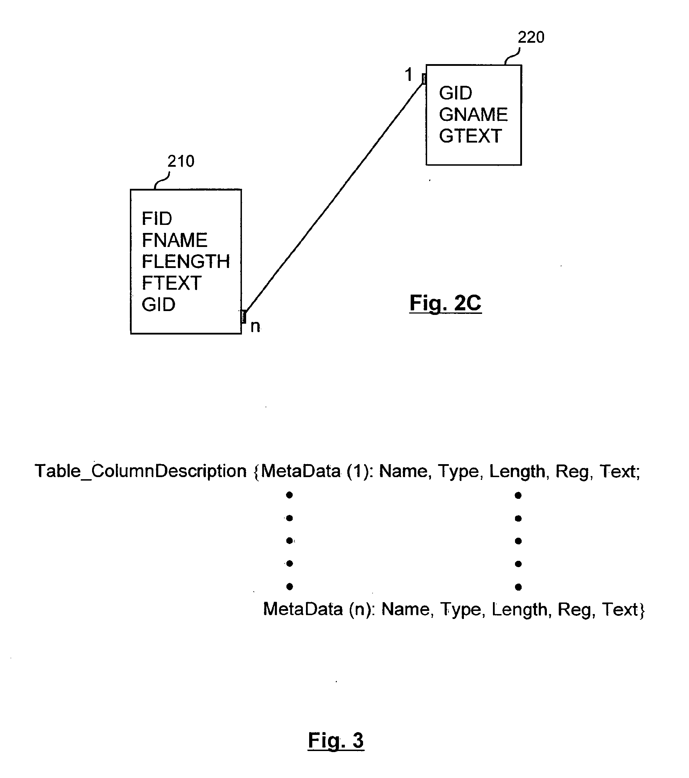

This is exemplarily shown in Figure 2C which illustrates a graphical user interface for defining relations between different tables. In the right-hand window 220 the columns of the genre table are listed, and in the left-hand window 210 the columns of the film table are listed. The connecting line between the GID column of the genre window and the GID column of the film window illustrates a relation between these two columns. The numbers respectively given at the two ends of the line illustrate that this is a 1 to n relation, which means that many fields in the column GID of the film table may refer to the same genre of the genre table. For example, many films can have the genre name "comedy", action, or the like.

The definition and the actual implementation of such relations are well known in the art, they are implemented, for example, in the database software called StarBase which is included in the StarOffice software produced by Sun Microsystems.

As will be readily apparent and as it is well known in the art, much more complex relations can be generated between individual database tables.

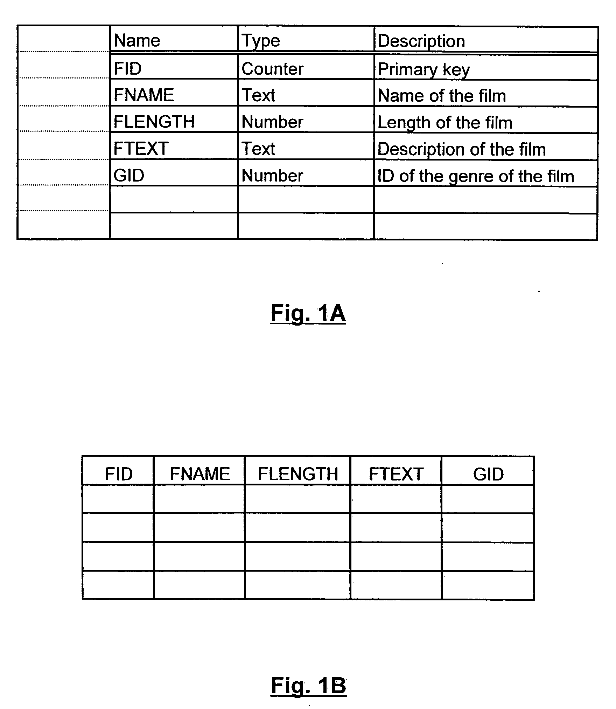

When creating a new database, it is very important to plan the structure of the database, which means one has to think about the structure of the individual database tables. For each database table the individual columns have to be "defined" with respect to their format, their content, etc. Such an definition is exemplarily shown in Figure 1A for the film table of Figure 1 B.

Figure 1A is a typical table which shows at up a graphical user interface used for defining a database table (a "table design view"). In the first column of the table of Figure 1A a user can input the name of a column, the second column corresponds to type of the column, and the third column gives a description of the column. From a comparison of Figure 1A and 1B one can see that the definition (or design) table of Figure 1A corresponds to the database table shown in Figure 1 B.

The table design view shown in Figure 1A only gives a simplified illustration of the input options for defining column properties. Many other properties and definitions also can be required or can be possible, depending on the actual database implementation.

E.g. for each database table column which is defined in one row of the table of Figure 1A, one could also define the length of the data which is to be contained in the database table column, one could define whether an input is required or whether the fields in the database table column may remain empty, etc. Depending on the database software actually used, such additional information can be inputted either directly into the definition table shown in Figure 1A (then the definition table would contain more columns for the additional information), or this additional information assumes predefined values which can be altered by a user.

Another possibility would be to provide further input windows or input forms for enabling the user to input the further column definition information required. How this possibility to input the actual column definition data (which also are called metadata) is implemented depends on the actual database software used and on the actual implementation. It is, however, well known to the skilled person to implement a user interface for defining the column properties of a table (the metadata).

What becomes apparent from the description so far is the fact that for each table of a database the columns and their properties have to be defined by inputting some information as shown exemplarily in Figure 1A. Because for each database table such definition data has to be inputted, the database table definition needs considerable effort of the user.

It is therefore an object of the present invention to provide an easier way for defining database table properties.

### SUMMARY OF THE INVENTION

According to an embodiment of the present invention, there is provided a method for generating the definition of the properties of database columns which uses already existing column definitions of a first database table for defining the properties of one or more columns of a second database table. This becomes possible by selecting one or more source columns of a first database table from which metadata is to be copied, further by selecting a target in a definition table defining the properties of the columns of a second database table, and finally copying the metadata from said source into said target.

Thereby it becomes possible to define the column properties of database tables in a much easier way without manually inputting the metadata for each individual column of each database table. A user may select as a source for copying any column of any already existing database table and copy the corresponding metadata into a target definition table for defining the table properties of a column of another table.

According to an embodiment of the invention, more than one source columns can be selected, and the metadata of the so selected source columns are simultaneously copied into the definition table of a second database table.

According to an embodiment of the invention, a computer program product is used for implementing the invention.

### BRIEF DESCRIPTION OF THE DRAWINGS

Figure 1A shows an example of a database table definition.
Figure 1B shows a database table corresponding to the table definition of Figure 1A.
Figure 2A shows a further database table definition.
Figure 2B shows a database table corresponding to the definition of Figure 2A.
Figure 2C illustrates a user interface for defining relations between different tables.
Figure 3 exemplarily shows the data structure of a column definition of a database table.
Figure 4 shows a flowchart of a method according to an embodiment of the present invention.
Figure 5 shows a flowchart of a method according to a further embodiment of the present invention.
Figure 6 shows a flowchart of a method according to a yet further embodiment of the present invention.

### DETAILED DESCRIPTION

The present invention will now be explained in detail by means of exemplary embodiments in connection with the accompanying drawings.

Figure 2A shows a table into which the user can input definition data (metadata) for defining the table structure (the column data) of a corresponding database table. The corresponding database table is shown in Figure 2B.

Let us now assume that the table of Figure 2B has been defined by inputting the table definition data as shown in Figure 2A. Let us further assume that a user now wishes to define a further database table which e.g. can reference the table of Figure 2B. For that purpose, the individual columns of this new table also have to be defined. A corresponding user interface of inputting the table definition data for the second table is shown in Figure 1A. As can be seen in Figure 1A, the last row is the genre ID (GID) which is a genre identifier and which corresponds to the first row of the table of Figure 2A. This information either could be inputted manually, or, according to an embodiment of the present invention it could be inputted as will be described as follows.

Since the table of Figure 2B already contains a column genre ID (GID), the definition data for this column already exists. According to an embodiment of the present invention this definition (the metadata) of the column GID can be copied from the table of Figure 2B into the table definition of Figure 1A. For that purpose, a user may, e.g. mark the column GID with the cursor and may copy the corresponding metadata into the clipboard. This can be done in many different ways, depending on the actual implementation. One possibility would be to use the "copy and paste" functionality of the task bar which usually is provided by the operating system, another possibility would be to use the context menu when clicking on the column header GID. Then in the context menu a window would pop up which provides the user with an option "copy metadata for this column" to copy the metadata into the clipboard.

A user could then move the cursor to the table shown in Figure 1A which could be displayed in the same or in another window on the screen, move the cursor into the last row of table of Figure 1A and then use e.g. the "paste" function of the taskbar or e.g. a "paste" function provided by the context menu.

Another possibility would be to use the "drag and drop" functionality. A user would move the cursor onto the column header "GID" of the table of Figure 2B, and then the user would drag and drop the metadata information into the first row of the table of Figure 1A.

The "copy and paste" function as well as the "drag and drop" function are functionalities well known in the art. Typically, they are provided by the operating system of a computer, and they can be easily used by a programmer skilled in the art for transferring data from some source location indicated by the cursor to some target location which also is indicated by the cursor which can be moved when using the mouse.

As can be seen from a comparison of tables of Figure 1A and 2A, the fields "type" and "description" are not identical for the GID definition of the table of Figure 1A and the target table of Figure 2A. This is for the following reason.

In Fig. 2A the GID row is the first row in the table, and it defines that the corresponding column of the table of Fig. 2B is the primary key of this table. This means that it has to uniquely identify each dataset in the table of Fig. 2B, and this is achieved by assigning it the type "counter" which means that it automatically is incremented for each succeeding row. this makes sure that the entries in the GID column of Fig. 2B uniquely identify a corresponding row, respectively.

In case of the table of Fig. 1B, however, the GID column is not the primary key and the corresponding data values don't have to be unique in each row. Rather to the contrary, the same GID value may occur many times in the table of Fig. 1B, because many films may belong to the same genre.

Therefore, the GID definition in the table of Fig. 1A differs from the one in Fig. 2A. The type in case of Fig. 1A is of the type "number" rather than of the type "counter", because it is not desirable to autoincrement the field values in this column.

A corresponding change could either be made manually, after having copied the metadata one to one from the table of Fig. 2B into the table of Fig. 1A, or it can be made automatically. The latter can be done by slightly amending the metadata such that the metadata copied into the target location is not exactly identical to the one of the source location , but rather is "compatible" to the one of the source location. This means that all metadata for which it makes sense are copied in an identical manner, but for those metadata where an amendment is deemed necessary, such an amendment is carried out. Typically this will be the metadata which define the source metadata as a primary key. The corresponding metadata will be converted such that the metadata copied into the target location will define the corresponding table column as being of the type "number" or "integer" without any autoincrementing functionality, so that the column defined by the metadata at the target location may contain the same data value several times.

It should, however, be understood that it may depend on the actual implementation which metadata are copied in an identical manner and which are amended or converted when being copied. If no amendment or adaptation is made automatically (or according to predefined or user selectable settings), then it might be necessary to carry out corrections manually after copying the metadata.

In the present example, when copying metadata from a primary key column to another column which should be able to reference the primary key as a so-called foreign key, the implementation could be such that an automatic conversion is made such that the type "counter" is changed into the type "number" when copying the metadata. This is particularly useful for those cases where the source column contains a primary key and the target column should be able to refer to the source column in a n to 1 relation as described before. Depending on the type of the source and the target, however, different options also can be useful, such a copying without any conversion.

The column definition of database tables will now be explained in somewhat more detail referring to Figure 3.

Figure 3 exemplarily shows a data structure used for representing the definition of the column data of one database table having n columns. An object named Table_ColumnDescription contains a list of n metadata description objects, each metadata description object containing a set of variables. Each object metadata (1) to metadata (n) corresponds to a single column and defines the properties of a single column of a corresponding database table. The variable "name" defines the name of the column (the column header). The type describes the type of data, such as integer, boolean, text, characters, counter, or the like. The definition "length" is a variable which defines the length of the data which can be inputted into the corresponding column, it is typically of the type integer and corresponds to the number of characters which can be inputted into the corresponding column. The variable "req" is typically of the type "boolean" and defines whether the corresponding column of the database table requires data to be inputted or not. If the variable is set to "false", then the corresponding fields of the column may remain empty, while they require data to be inputted if the variable is "true". The variable "text" is typically of the type "string" and can contain some descriptive text to explain the content of the corresponding column.

It will be readily understood by the skilled reader that a column description may as well be implemented by other sets of variables. E.g. instead of providing a type "counter" representing the property of a column value to be incremented for each succeeding entry, the type could be set to "integer" and there could be a further variable "autoincrement" of the type boolean in the set of variables. If set to "true", the column values would then be automatically incremented for each succeeding value.

Moreover, additional variables could be provided to define further column properties. Examples could be a variable defining a currency, this could e.g. assume values like US$, EUR, etceteras. Also a "default value" could be provided which defines which value a column field should assume before any other value has been inputted. Default values could be zero, an empty character string, or the like.

Each of the objects metadata (1) to metadata (n) may be addressed by a corresponding pointer, and the pointer can be used when the data is to be copied from a source definition table to a target definition table. Of course, as will be readily apparent by the skilled person, instead of addressing the variables by means of a pointer they may also be addressed directly.

When a new column is to be defined for a certain database table, then in the case of the example of Figure 3 there may be appended a new object metadata (n+1) with a corresponding set of variables to the list metadata (1) to metadata (n), and the variable values of the source metadata would be copied into the newly created metadata object metadata (n+1). Alternatively, and depending on the selected target location in the target table, the new metadata object could be generated at an intermediate location in the list of metadata objects 1 to n, and the subsequent metadata objects would ten be renumerated accordingly, as will be readily understood by the skilled person.

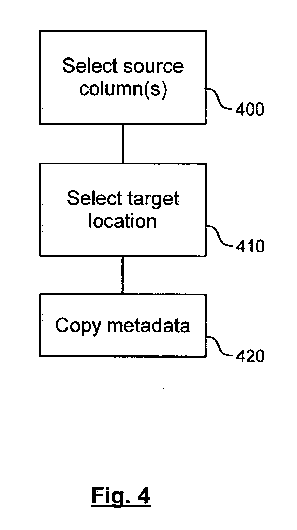

Figure 4 exemplarily shows a simple flowchart for carrying out a method according to an embodiment of the present invention. Using the cursor a user may select one or more columns, e.g. from the database table shown in Figure 2B. This operation 400 of Figure 4 can be done by pointing with the cursor e.g. onto the header of a column of the table shown in Figure 2B in order to thereby select the "source" for copying the metadata information. A user may then in operation 410 select the target location for copying the metadata information. This can e.g. be done by selecting a row of the definition table shown in Figure 1A.

Then in operation 420 the metadata information corresponding to the selected source column is copied into the selected target row of the definition table. If more than one source columns have been selected, then the meta information will subsequently be written into succeeding rows of the target definition table.

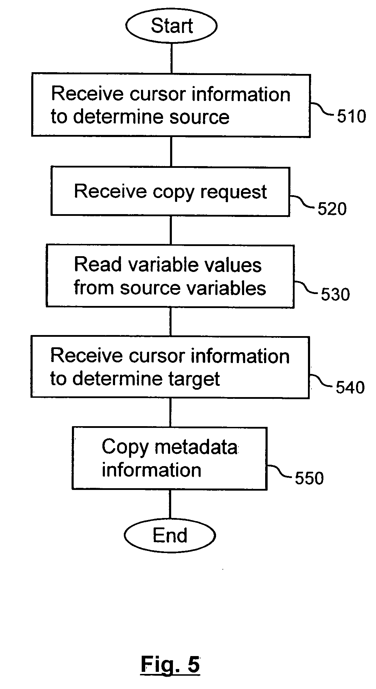

In Figure 5 there is shown an exemplary flowchart explaining in somewhat more detail the internal function of the method according to an embodiment of the present invention. As already explained before, in operation 510 some cursor information is received from a user input to determine the source of the data to be copied. This can correspond to the marking of a column with the cursor, or it can correspond to moving the cursor onto a column header and holding the left mouse button to initiate a drag and drop operation. In operation 520 then a copy request is received or inputted by a user. This can correspond to the "copy" function of the clipboard or it can correspond to the start of a movement of the mouse while holding the left mouse button pressed to carry out a drag and drop operation. Both, operations 510 and 520 may be implemented by using functions provided by known operating systems, such as the Windows operating system, the Unix operating system, or the like. The practical implementation of such functions is well known to the persons skilled in the art, and they can be used to copy a certain piece of information from one location to another location (from the source location to a target location). For that purpose, in operation 530 the variable values of the metadata information corresponding to the selected source are read out. This can be done by storing the variable values at some intermediate storage location, or it can be carried out by generating a pointer which points to the storage location corresponding to the variable values. Operation 530 enables the writing of the variable values into some other storage location into which they are to be copied. For that purpose, in operation 540 there is received or inputted by a user some cursor information to determine the target location into which the metadata information is to be copied. As explained before, this can be done by moving the cursor into the location of the definition table where the metadata is to be copied into.

Finally, in operation 550 the metadata information is copied into the selected target location, which corresponds to a selected row of the target definition table, such as the one shown in Figure 1A.

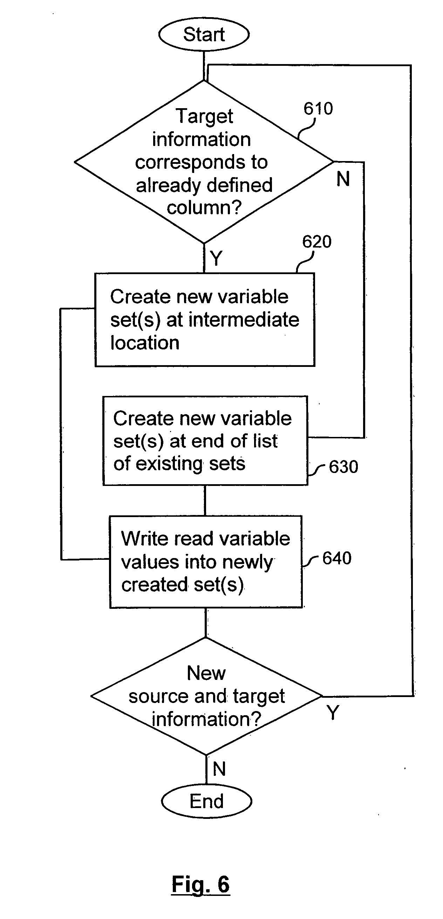

Figure 6 shows a flowchart which explains in somewhat more detail the copying procedure according to an embodiment of the present invention. It should be noted, that the row of the definition table which has been selected as a target may either already contain some metadata information, or, it might be an empty row such as the last two rows shown in the table of Figure 1A. Depending on that, the copying procedure is carried out somewhat differently. This is now explained in connection with Figure 6.

In operation 610 it is checked whether the target information (the target location which corresponds to certain row of the definition table selected as a target) already contains metadata, which means it is checked whether the selected row already defines the properties of a column of a database table. If this is the case, then in operation 620 a new variable set (metadata object) is created at a corresponding intermediate location within the list of already existing metadata objects as explained before. Then the procedure continues with operation 640 where the read variable values are written into the newly created metadata object. The procedure then continues with operation 650, where it is checked whether some new source and target information has been selected. This means, that it is checked whether the user by using the cursor has selected another source containing column definitions and another target into which the source metadata is to be copied. If yes, then the procedure returns to operation 610. If no, then the procedure ends.

If in operation 610 it is determined that the target information does not correspond to an already defined column, which means that the metadata for a column to be newly defined has been selected as the target, then in operation 630 there is created a new variable set for column metadata and is appended to the already existing sets (the already existing metadata objects). Referring to Figure 3, this can be done by generating a new metadata object which is appended to the list of metadata objects already contained in the Table_ColumnDescription object shown in Figure 3. In other words, if n metadata objects already exist, then an n+1th metadata object is additionally generated. Then, in operation 640 the variable values which have been read from the source are written into the newly created variable set (metadata (n+1)).

Again, the procedure then continues with operation 650 which has been already explained before.

If more than one columns are marked as source, then operations 620, 630 and 640 are accordingly carried out for a plurality of metadata sets (metadata objects) as will be readily apparent to the skilled person.

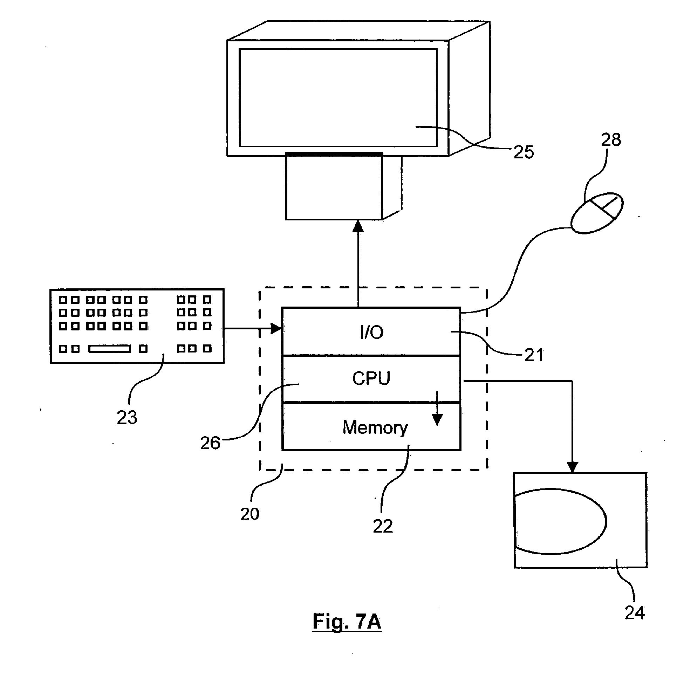

The present invention is applicable to a hardware configuration like a personal computer or a work station as illustrated schematically in Figure 7A. The computer may comprise a central processing unit CPU 26, an input output I/O unit 21, an internal memory 22 and an external memory 24. The computer may further comprise standard input devices like a keyboard 23, a mouse 28 or a speech processing means (not illustrated).

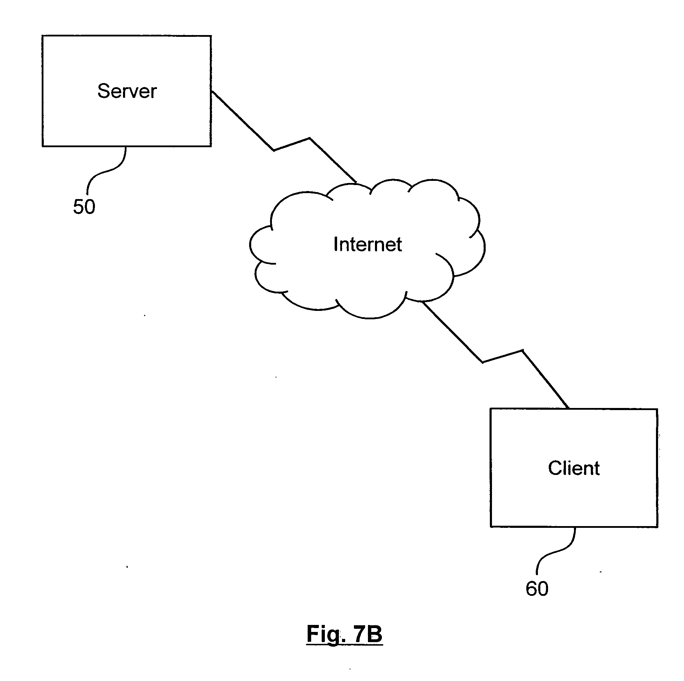

The invention, however, may also be applied to a client-server configuration as illustrated in Figure 7B. The source and the target for copying may be displayed on a display screen of a client device 60 while some or all operations of the method as illustrated before in connection with Figures 1 to 6 are carried out on one or more server computer accessible by a client device over a data network such as the internet using a browser application or the like.

Embodiments of the invention as a whole or in part may be implemented by a computer program or a computer program product. A computer program product may take the form of any data carrier such as floppy disks, CD-ROMs, DVDs, PROMs, EPROMs, EEPROMs, or the like, having recorded thereon computer executable instructions which when carried out by a computer cause said computer to perform a method according to an embodiment of the invention.

A computer program product could also take any other form suitable for embodying computer executable instructions, such as a signal transmitted through a communications link, a network connection, or within a computer itself and representing computer executable instructions.

While the invention has been particularly shown with the reference to embodiments thereof, it will be understood by those skilled in the art that various other changes in the form and details may be made therein without departing from the spirit and scope of the invention. The source for copying may for example also consist of database tables which are the result of a query of a database. A user may e.g. query a database and may receive, depending on the actual query, a result output in form of a table, and a column of such an output table may also be selected as a source for metadata copying. Depending on the actual query a user may thereby very quickly be provided with a table columns for which the metadata have already been generated, and from such a table he may then just copy the metadata avoiding the need for manually typing it in.

## Claims

1. A method for defining the properties of columns of database tables, said method comprising:
receiving a user input for selecting at least one source column of a first database table as a source from which metadata defining the properties of said column is to be copied;
receiving a user input to select a target location of a definition table which defines the column properties of a second database table as a target into which said metadata is to be copied;
copying said metadata from said source to said target in order to define the properties of at least one column of said second database table such that it corresponds to the definition of the properties of said one or more columns of said first database table selected as a source.

2. The method of claim 1, wherein
said user selection is performed by the cursor and said copying is performed by using the copy and paste function of the clipboard.

3. The method of claim 1, wherein
said selection and copying is performed by using the drag and drop function.

4. The method of one of claims 1 or 2, wherein metadata for more than one source column is copied simultaneously into said target location.

5. The method of one of the preceding claims, wherein said metadata comprises:
the column name;
the column type;
the column length;
whether data is required or not;
a description of the column data.

6. The method of one of the preceding claims, said method comprising:
receiving cursor information to determine one or more source columns;
receiving a copy request for copying metadata information;
reading the variable values from the variables corresponding to the one or more source columns selected;
receiving cursor information to determine a target location;
copying the metadata information according to said selected source and target.

7. The method of one of the preceding claims, wherein
the properties of a certain column are defined by a corresponding set of variables;
a certain table is defined by a collection of said sets of variables, each of said sets corresponding to one column of said table; and wherein
if an already existing column definition is selected as said target, a new variable set is created at an intermediate location between already existing variable sets to define the properties of a further column of said second database;
if said selected target does not correspond to an already existing column, a new variable set is created at the end of the already existing variable sets to define the properties of a further column of said second database table; and
the selected source metadata variable values are read and written into the newly created set of variables.

8. The method of one of the preceding claims, wherein
the first database table is the result table resulting from a database query.

9. An apparatus for defining the properties of columns of database tables, said apparatus comprising:
means for receiving a user input for selecting at least one source column of a first database table as a source from which metadata defining the properties of said column is to be copied;
means for receiving a user input to select a target location of a definition table which defines the column properties of a second database table as a target into which said metadata is to be copied;
means for copying said metadata from said source to said target in order to define the properties of at least one column of said second database table such that it corresponds to the definition of the properties of said one or more columns of said first database table selected as a source.

10. The apparatus of claim 9, wherein
said user selection is performed by the cursor and said copying is performed by using the copy and paste function of the clipboard.

11. The apparatus of claim 9, wherein
said selection and copying is performed by using the drag and drop function.

12. The apparatus of one of claims 9 or 10, wherein metadata for more than one source column is copied simultaneously into said target location.

13. The apparatus of one of claims 9 to 12, wherein said metadata comprises:
the column name;
the column type;
the column length;
whether data is required or not;
a description of the column data.

14. The apparatus of one of claims 9 to 13, said apparatus comprising:
means for receiving cursor information to determine one or more source columns;
means for receiving a copy request for copying metadata information;
means for reading the variable values from the variables corresponding to the one or more source columns selected;
means for receiving cursor information to determine a target location;
means for copying the metadata information according to said selected source and target.

15. The apparatus of one of claims 9 to 14, wherein
the properties of a certain column are defined by a corresponding set of variables;
a certain table is defined by a collection of said sets of variables, each of said sets corresponding to one column of said table; and wherein
if an already existing column definition is selected as said target, the corresponding variable values are overwritten by the variable values of said selected source, and
if said selected target does not correspond to an already existing column, a new variable set is created to define the properties of a further column of said second database table.

16. The apparatus of one of claims 9 to 15, wherein
the first database table is the result table resulting from a database query.

17. A computer program for defining the properties of columns of database tables, said computer program comprising:
computer program code means for causing a computer to receive a user input for selecting at least one source column of a first database table as a source from which metadata defining the properties of said column is to be copied;
computer program code means for causing a computer to receive a user input to select a target location of a definition table which defines the column properties of a second database table as a target into which said metadata is to be copied;
computer program code means for causing a computer to copy said metadata from said source to said target in order to define the properties of at least one column of said second database table such that it corresponds to the definition of the properties of said one or more columns of said first database table selected as a source.

18. The computer program of claim 17, said computer program further comprising:
computer program code for when being executed enabling a computer to carry out a method according to one of claims 2 to 8.
